# EUROPÄISCHE PATENTSCHRIFT

(11) **EP 3 765 736 B1**
(45) Veröffentlichungstag und Bekanntmachung des Hinweises auf die Patenterteilung: **24.11.2021**
(21) Anmeldenummer: 19735256.0
(22) Anmeldetag: 26.06.2019
(51) Int. Cl.: F03D 7/02

(54) **WINDKRAFTANLAGENBLATTVERSTELLSYSTEM**
WIND TURBINE BLADE ADJUSTMENT SYSTEM
SYSTÈME D'AJUSTEMENT DE PALE D'ÉOLIENNE

(30) Priorität: 28.06.2018 DE 102018115587
(43) Veröffentlichungstag der Anmeldung: 20.01.2021
(73) Patentinhaber: Beckhoff Automation GmbH, 33415 Verl (DE)
(72) Erfinder: KORDTOMEIKEL, Dirk, 23758 Wangels (DE)
(74) Vertreter: Patentanwaltskanzlei WILHELM & BECK
(86) Internationale Anmeldenummer: PCT/EP2019/067058
(87) Internationale Veröffentlichungsnummer: WO 2020/002458

(56) Entgegenhaltungen:
- EP-A1- 2 878 808
- DE-A1-102010 036 358

## Beschreibung

Die Erfindung betrifft ein Windkraftanlagenblattverstellsystem. Die Erfindung betrifft weiterhin ein Verfahren zum Herstellen eines Windkraftanlagenblattverstellsystems.

Aus DE 2010 036 358 A1 ist ein Blattwinkelverstellantrieb für eine Windkraftanlage bekannt, wobei ein Umrichter an einem Motor des Blattwinkelverstellantriebs angeordnet beziehungsweise angeflanscht ist. Der Umrichter weist als sogenannter Vollumrichter eine Eingangsstufe und eine Ausgangsstufe auf, wobei eine Umrichtersteuerung am Motor angebracht sein kann. An einen Gleichstromzwischenkreis, welcher zwischen der Eingangs- und Ausgangsstufe ausgebildet ist, kann ein Notstromversorgungssystem integriert sein.

Ein anderes Blattwinkelverstellsystem ist aus DE102009044570 A1 bekannt

DE 3642724 A1 offenbart einen Elektromotor mit einem integrierten Frequenzumrichter. Der Frequenzumrichter weist einen Eingangskreis und einen Ausgangskreis auf. Offenbart ist, dass in einer Variante der Eingangskreis auch extern angeordnet sein kann.

Aus DE 10 2014 114 129 A1 ist ein Wechselstrommotor mit einem daran angeordneten Wechselrichter bekannt.

Wechselstrommotoren, insbesondere Asynchronmotoren, sind im Vergleich zu Gleichstrommotoren in der Regel leistungsstärker und kostengünstiger. Nachfolgend wird ein Wechselstrommotor stets als "Elektromotor" bezeichnet.

Die EP 2 878 808 A1 offenbart ein gattungsbildendes Blattverstellsystem.

Eine Aufgabe der Erfindung ist es, ein verbessertes Blattverstellsystem (im Allgemeinen auch als "Pitch-System" bezeichnet) für eine Windkraftanlage bereit zu stellen.

Gemäß einem ersten Aspekt wird die Aufgabe gelöst mit einem Windkraftanlagenblattverstellsystem, aufweisend:
- wenigstens einen mittels eines Wechselrichters ansteuerbaren Elektromotor; wobei
- der Wechselrichter mittels eines Gleichrichters ansteuerbar ist; und wobei
- der Gleichrichter und der Wechselrichter im Windkraftanlagenblattverstellsystem örtlich voneinander getrennt angeordnet sind.

Vorteilhaft ist auf diese Art und Weise kein Schaltschrank für ein einzelnes Rotorblatt bzw. das Windkraftanlagenblattverstellsystem der Windkraftanlage erforderlich. Der Gleichrichter ist gewissermaßen zentralisiert und kann zur energetischen Versorgung des distanziert angeordneten Elektromotors vorgesehen sein. Vorteilhaft kann auf diese Art und Weise in der Windkraftanlage Bauraum eingespart werden, wobei zwischen den Gleichrichter und dem Wechselrichter ein Gleichspannungszwischenkreis ausgebildet ist.

Gemäß einem zweiten Aspekt wird die Aufgabe gelöst mit einem Verfahren zum Herstellen eines Windkraftanlagenblattverstellsystems, aufweisend die Schritte:
- Bereitstellen wenigstens eines mittels eines Wechselrichters ansteuerbaren Elektromotors; wobei
- der Wechselrichter mittels eines Gleichrichters ansteuerbar ausgebildet wird; und wobei
- der Gleichrichter und der Wechselrichter im Windkraftanlagenblattverstellsystem örtlich voneinander getrennt angeordnet werden.

Bevorzugte Ausführungsformen des Windkraftanlagenblattverstellsystems ergeben sich aus den abhängigen Ansprüchen.

Eine bevorzugte Ausführungsform des Windkraftanlagenblattverstellsystems zeichnet sich dadurch aus, dass der Wechselrichter im Elektromotor angeordnet ist. Dadurch ergibt sich eine Möglichkeit einer Verwendung des Elektromotors als ein modulares, dezentrales Servoantriebssystem, bei dem der zentrale Gleichrichter als ein Einspeise- und Koppelmodul fungiert.

Eine weitere bevorzugte Ausführungsform des Windkraftanlagenblattverstellsystems zeichnet sich dadurch aus, dass sie mehrere Elektromotoren mit jeweils einem dem jeweiligen Elektromotor zugeordneten, im jeweiligen Elektromotor angeordneten Wechselrichter aufweist, wobei die Wechselrichter über eine Verteilereinrichtung vom Gleichrichter ansteuerbar sind. Vorteilhaft ergibt sich dadurch eine Möglichkeit einer Steuerung aller Rotorblätter der Windkraftanlage, wodurch ein sicherer, optimierter Betrieb der Windkraftanlage unterstützt ist.

Eine weitere bevorzugte Ausführungsform des Windkraftanlagenblattverstellsystems zeichnet sich dadurch aus, dass die Elektromotoren aus wenigstens einem Energiespeichersystem energetisch speisbar sind. Dadurch kann auch im Falle eines Stromausfalls ein Rotorblatt der Windkraftanlage derart verstellt werden, dass dadurch eine sichere Deaktivierung der gesamten Windkraftanlage möglich ist.

Eine weitere bevorzugte Ausführungsform des Windkraftanlagenblattverstellsystems ist dadurch gekennzeichnet, dass jedem der Elektromotoren jeweils zumindest ein Energiespeichersystem zugeordnet ist, wobei jeder Elektromotor aus dem ihm zugeordneten Energiespeichersystem speisbar ist. Vorteilhaft ist dadurch eine Redundanz bereitgestellt, wodurch eine Sicherheit des Betriebs der Windkraftanlage noch weiter gesteigert wird. Falls beispielsweise aufgrund eines Kurzschlusses ein einzelnes Energiespeichersystem keine ausreichende elektrische Energie mehr aufweisen sollte, um den zugeordneten Elektromotor zu betreiben, so kann zumindest ein anderer der Elektromotoren aus dem ihm zugeordneten Energiespeichersystem im Falle eines Stromausfalls betrieben werden und das zugehörige Rotorblatt der Windkraftanlage so im Verhältnis zum Wind zu drehen bzw. stellen, dass die Windkraftanlage sicher abgebremst bzw. deaktiviert wird.

Bei einer weiteren bevorzugten Ausführungsform des Windkraftanlagenblattverstellsystems ist vorgesehen, dass über eine Verteilereinrichtung jeder der Elektromotoren aus zumindest einem weiteren Energiespeichersystem energetisch speisbar ist, welches einem der Elektromotoren zugeordnet ist. Vorteilhaft lässt sich auf diese Weise jeder Elektromotor aus jedem Energiespeichersystem energetisch speisen, wodurch die Sicherheit der Windkraftanlage noch weiter verbessert ist.

Eine weitere bevorzugte Ausführungsform des Windkraftanlagenblattverstellsystems zeichnet sich dadurch aus, dass die Verteilereinrichtung intern oder extern vom Gleichrichter angeordnet ist. Dadurch kann ein Bauraum innerhalb der Windkraftanlage optimiert genutzt werden.

Eine weitere Ausführungsform des Windkraftanlagenblattverstellsystems ist dadurch gekennzeichnet, dass der wenigstens eine Wechselrichter mit dem Gleichrichter über eine dem wenigstens einen Wechselrichter zugeordnete Leitung verbunden ist, über die elektrische Leistung und Daten übertragbar sind. Dadurch wird neben der energetischen auch eine logische Ansteuerung des Elektromotors mittels nur einer Leitung bereitstellt, wodurch eine bauraumoptimierte Montage und ein optimierter Betrieb der Windkraftanlage unterstützt sind.

Weitere bevorzugte Ausführungsformen des Windkraftanlagenblattverstellsystems zeichnen sich dadurch aus, dass ein Schleifring in einer Nabe oder in einer Gondel der Windkraftanlage angeordnet ist, wobei mittels des Schleifrings elektrische Leistung und/oder Daten für das Windkraftanlagenblattverstellsystem übertragbarsind. Vorteilhaft werden dadurch unterschiedliche technische Realisierungsmöglichkeiten bereitgestellt, wobei bei einer Anordnung des Schleifrings innerhalb der Gondel der Vorteil erzielt wird, dass dadurch der zentrale Gleichrichter günstigeren Umweltbedingungen als in der Nabe ausgesetzt ist.

Eine weitere bevorzugte Ausführungsform des Windkraftanlagenblattverstellsystems zeichnet sich dadurch aus, dass der wenigstens eine Wechselrichter einen Stromregler aufweist. Dadurch wird auf vorteilhafte Weise der Elektromotor mit optimalem elektrischem Strom versorgt. Bei einem Windkraftanlagenblattverstellsystem mit mehreren Elektromotoren können auch eine Mehrzahl oder auch alle Elektromotoren einen Stromregler aufweisen.

Bei einer weiteren bevorzugten Ausführungsform des Windkraftanlagenblattverstellsystems ist vorgesehen, dass der wenigstens eine Wechselrichter einen Geschwindigkeitsregler aufweist. Dadurch ist ein noch weiter verbesserter Betrieb der Windkraftanlage unterstützt. Bei einem Windkraftanlagenblattverstellsystem mit mehreren Elektromotoren können auch eine Mehrzahl oder auch alle Elektromotoren einen Geschwindigkeitsregler aufweisen.

Eine weitere bevorzugte Ausführungsform des Windkraftanlagenblattverstellsystem zeichnet sich daraus, dass der wenigstens eine Wechselrichter einen Positionsregler aufweist. Dadurch wird vorteilhaft eine optimale Position der Rotorblätter während des Betriebs der Windkraftanlage bereitgestellt. Bei einem Windkraftanlagenblattverstellsystem mit mehreren Elektromotoren können auch eine Mehrzahl oder auch alle Elektromotoren einen Positionsregler aufweisen.

Die Erfindung wird im Folgenden anhand von Ausführungsbeispielen unter Bezugnahme auf die beigefügten Zeichnungen näher erläutert. Dabei zeigt:
- Fig. 1: eine prinzipielle Darstellung einer ersten Ausführungsform des erfindungsgemäßen Windkraftanlagenblattverstellsystems;
- Fig. 2: eine prinzipielle Darstellung einer zweiten Ausführungsform des erfindungsgemäßen Windkraftanlagenblattverstellsystems;
- Fig. 3: eine prinzipielle Darstellung einer dritten Ausführungsform des erfindungsgemäßen Windkraftanlagenblattverstellsystems;
- Fig. 4: eine prinzipielle Darstellung einer vierten Ausführungsform des erfindungsgemäßen Windkraftanlagenblattverstellsystems;
- Fig. 5: eine prinzipielle Darstellung einer fünften Ausführungsform des erfindungsgemäßen Windkraftanlagenblattverstellsystems; und
- Fig. 6: eine prinzipielle Darstellung des Ablaufs eines Verfahrens zum Herstellen eines Windkraftanlagenblattverstellsystems.

Ein Kerngedanke der vorliegenden Erfindung wird insbesondere darin gesehen, dass in einem Windkraftanlagenblattverstellsystem der Gleichrichter und der Wechselrichter örtlich getrennt voneinander angeordnet sind. Daraus ergibt sich vorteilhaft, dass in einem Gleichspannungszwischenkreis zwischen dem Gleichrichter und der Wechselrichter ausschließlich elektrischer Gleichstrom übertragen wird und dass ein Schaltschrank für einen Vollumrichter nicht erforderlich ist, weil dieser nicht vorhanden ist. Ein Schaltschrank ist gegebenenfalls lediglich für ein elektrisches Speichersystem erforderlich, wobei dieser allerdings wesentlich kleiner und kostengünstiger baut. Der Gleichrichter ist auf diese Weise gewissermaßen "zentralisiert" und kann zur Einspeisung sämtlicher Elektromotoren des Windkraftanlagenblattverstellsystems verwendet werden.

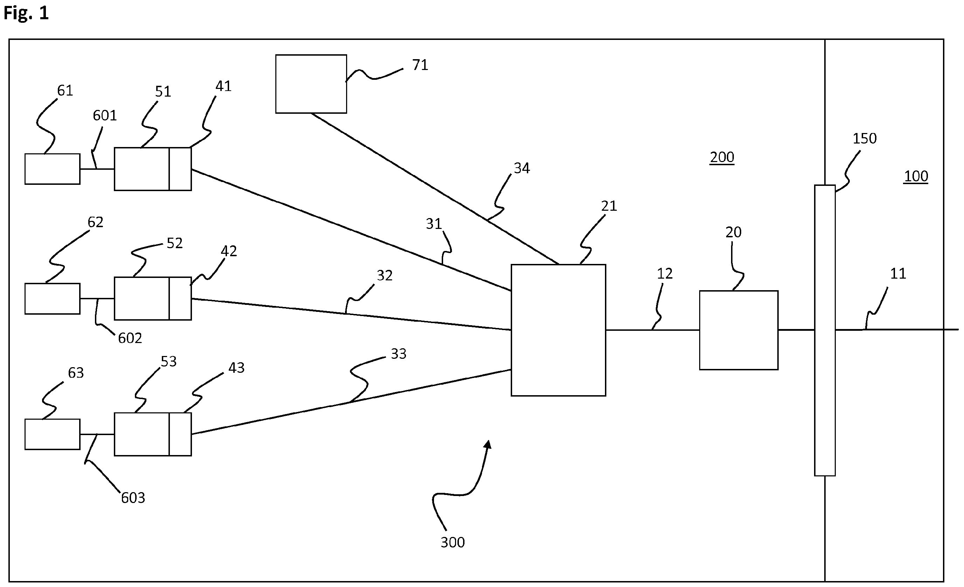

Fig. 1 zeigt ein prinzipielles Übersichtsblockschaltbild einer ersten Ausführungsform eines erfindungsgemäßen Windkraftanlagenblattverstellsystems 300, wobei das erfindungsgemäße Windkraftanlagenblattverstellsystem 300 innerhalb einer Nabe 200 und einer Gondel 100 einer Windkraftanlage (nicht dargestellt) angeordnet ist. Ein zentraler Gleichrichter 20 wird mittels einer Einspeiseleitung 11 durch ein nicht dargestelltes elektrisches Versorgungsnetz mit elektrischer Energie in Form von elektrischem Wechselstrom versorgt.

Die Einspeiseleitung 11 führt über einen ersten Schleifring 150 von der Gondel 100 in die Nabe 200. Der zentrale Gleichrichter 20 wandelt den elektrischen Wechselstrom in einen elektrischen Gleichstrom um. Über eine weitere Versorgungsleitung 12 wird der elektrische Gleichstrom vom zentralen Gleichrichter 20 in eine erste Verteilereinrichtung 21 übertragen. Die elektrische Versorgungsleitung 12 kann neben elektrischer Leistung optional zusätzlich auch noch Daten übertragen, was mittels eines industriellen Feldbussystems realisiert werden kann. Vorzugsweise ist die Versorgungsleitung 12 eine EtherCAT P^{®} -Leitung, es können aber auch andere Leitungen zur Übertragung von geeigneten industriellen Feldbusprotokollen (z.B. PROFIBUS^{®}, CANopen^{®}, usw.) zur Übertragung von Daten verwendet werden.

Der zentrale Gleichrichter 20 kann über eine nicht dargestellte übergeordnete Steuerung gesteuert werden. Alternativ ist auch denkbar, dass die erste Verteilereinrichtung 21 mechanisch und/oder funktional in den zentralen Gleichrichter 20 integriert ist. Bei weiteren, nicht dargestellten Ausführungsformen können die jeweiligen Verteilereinrichtungen mechanisch und/oder funktional in den zentralen Gleichrichter 20 integriert werden.

Erkennbar ist, dass eine erste Leitung 31 die erste Verteilereinrichtung 21 mit einem ersten Wechselrichter 41 verbindet. Die erste Leitung 31 ist somit dem ersten Wechselrichter 41 zugeordnet. Der erste Wechselrichter 41 ist an einem ersten Elektromotor 51 angeordnet, um diesen anzutreiben. Vorzugsweise ist der Wechselrichter 41 innerhalb des Elektromotors 51 angeordnet.

Der Aufbau des Elektromotors 51 ist dabei modular und kaskadierbar mit einem Einspeise- und Koppelmodul (nicht dargestellt), einem Verteilermodul (nicht dargestellt) und dezentralen Servoantrieben, wobei das Einspeise- und Koppelmodul durch den zentralen Gleichrichter 20 repräsentiert wird.

Mit dem ersten Elektromotor 51 kann eine erste mechanische Welle 601 angetrieben werden, wobei die erste mechanische Welle 601 mit einem ersten Rotorabschnitt 61 wirkverbunden ist. Der erste Rotorabschnitt 61 umfasst zwei Drehgeber, ein Getriebe und ein Rotorblatt (alles nicht dargestellte Elemente). Aus Gründen von vorgeschriebenen Richtlinien bei Windkraftanlagen müssen bei Windkraftanlagenblattverstellsystemen zwei Drehgeber verwendet werden, wobei ein erster Drehgeber des ersten Rotorabschnitts 61 vor dem Getriebe und ein zweiter Drehgeber des ersten Rotorabschnitts 61 nach dem Getriebe angeordnet ist. Die beiden Drehgeber des ersten Rotorabschnitts 61 sind kommunikationstechnisch mit einem Positionsregler und/oder einem Geschwindigkeitsregler des ersten Wechselrichters 41 verbunden.

Alternativ können die beiden Drehgeber des ersten Rotorabschnitts 61 kommunikationstechnisch mit dem zentralen Regler einer nicht dargestellten, übergeordneten Steuerung verbunden sein. Das Getriebe ist mit dem Rotorblatt mechanisch wirkverbunden. Wenn die erste mechanische Welle 601 mittels des Elektromotors 51 angetrieben wird, wird das Rotorblatt des ersten Rotorabschnitts 61 bewegt bzw. verstellt.

Analog zur dargestellten Anbindung des ersten Elektromotors 51 an die Verteilereinrichtung 21 ist auch ein zweiter Elektromotor 52 an einen zweiten Wechselrichter 42 über eine zweite Leitung 32 und ein dritter Elektromotor 53 mit einem dritten Wechselrichter 43 über eine dritte Leitung 33 angebunden. Die zweite Leitung 32 ist somit dem zweiten Wechselrichter 42 und die dritte Leitung 33 ist somit dem dritten Wechselrichter 43 zugeordnet. Auf diese Weise kann mittels des zentralen Gleichrichters 20 der elektrische Gleichstrom über die erste, zweite und dritte Leitung 31, 32, 33 zu dem ersten, zweiten und dritten Wechselrichter 41, 42, 43 geleitet werden, wodurch der erste, zweite und dritte Elektromotor 51, 52, 53 elektrisch gespeist werden. In Abhängigkeit des Aufbaus der Windkraftanlage und der entsprechenden Richtlinien können auch mehr oder weniger als drei Wechselrichter 41, 42, 43 mit daran angeordneten Elektromotoren 51, 52, 53 vorgesehen sein.

Erkennbar ist ferner ein mit der ersten Verteilereinrichtung 21 verbundenes elektrisches Energiespeichersystem 71 (welches zum Beispiel unter anderem Batterien, Akkumulatoren und/oder Kondensatoren umfassen kann) welche für den ersten, zweiten und/oder dritten Elektromotor 51, 52, 53 im Falle eines Stromausfalls des elektrischen Versorgungsnetzes eine Notstromversorgung bereitstellen können, um das zugehörige Rotorblatt der Windkraftanlage im Verhältnis zum Wind derart zu drehen bzw. zu stellen, dass die Windkraftanlage dadurch sicher abgebremst bzw. deaktiviert wird.

Die erste, zweite und dritte Leitung 31, 32, 33 können zusätzlich eine Datenübertragung bereitstellen, wobei die erste, zweite und dritte Leitung 31, 32, 33 dazu insbesondere als EtherCAT-P^{®} Leitungen ausgebildet sind.

Der erste, zweite und dritte Wechselrichter 41, 42, 43 ist jeweils örtlich von der ersten Verteilereinrichtung 21 getrennt. Das erste Energiespeichersystem 71 kann räumlich ebenfalls von der ersten Verteilereinrichtung 21 getrennt angeordnet sein.

Der erste Wechselrichter 41 ist dazu ausgebildet, den ersten Elektromotor 51 anzusteuern. Hierzu setzt der erste Wechselrichter 41 den elektrischen Gleichstrom mittels Voll- oder Halbbrücken in einen elektrischen Wechselstrom um. Der erste Wechselrichter 41 und der erste Elektromotor 51 bilden eine physikalische Einheit und sind dabei räumlich zusammen angeordnet.

Die Verschaltung und die Funktionsweise des zweiten Elektromotors 52 und des dritten Elektromotors 53 sind analog zur Verschaltung und zur Funktionsweise des ersten Elektromotors 51, weswegen an dieser Stelle der Einfachheit halber auf eine detaillierte Beschreibung verzichtet wird.

Vorzugsweise weist wenigstens einer der ersten, zweiten und/oder dritten Wechselrichter 41, 42, 43 zusätzlich einen Positionsregler (nicht dargestellt) und/oder eine Geschwindigkeitsregler (nicht dargestellt) auf. Besonders bevorzugt weisen der erste, zweite und dritte Wechselrichter 41, 42, 43 einen Positionsregler und/oder einen Geschwindigkeitsregler auf. Vorzugsweise weist wenigstens einer des ersten, zweiten und/oder dritten Wechselrichters 41, 42, 43 zusätzlich einen Stromregler (nicht dargestellt) auf, der dafür sorgt, dass der vom ersten, zweiten oder dritten Wechselrichter 41, 42, 43 jeweils angesteuerte erste, zweite oder dritte Elektromotor 51, 52, 53 mit geeignetem bzw. optimiertem elektrischem Strom versorgt wird. Dadurch ist es möglich, dass eine Regelung der Voll- oder Halbbrücken des ersten, zweiten und dritten Wechselrichters 41, 42, 43 nicht durch einen zentralen Regler in einer übergeordneten Steuerung durchgeführt werden muss.

Der erste, zweite und dritte Wechselrichter 41, 42, 43 weisen vorzugsweise jeweils einen Feldbusanschluss zur Datenkommunikation auf. Bei der Ausführungsform des Windkraftanlagenblattverstellsystems 300 von Fig. 1 ist der Feldbusanschluss des ersten, zweiten und dritten Wechselrichters 41, 42, 43 an die jeweils zugeordnete erste, zweite und dritte Leitung 31, 32, 33 angeschlossen, da die erste, zweite und dritte Leitung 31, 32, 33, wie oben beschrieben, sowohl eine Daten- als auch eine elektrische Energieübertragung bereitstellen kann.

Der erste, zweite und dritte Elektromotor 51, 52, 53 ist vorzugsweise jeweils ein Asynchronmotor.

Das erste Energiespeichersystem 71 ist dazu ausgebildet, elektrische Energie zu speichern. Das erste Energiespeichersystem 71 besteht aus Gründen von vorgeschriebener Redundanz aus zwei nicht dargestellten Energiespeicherelementen. Das erste Energiespeichersystem 71 kann durch eine eigene Steuereinheit (nicht dargestellt) oder durch die übergeordnete Steuerung (nicht dargestellt) aufgeladen oder entladen werden. Die Energiespeicherelemente des ersten Energiespeichersystems 71 umfassen beispielsweise Akkumulatoren und/oder Kondensatoren, insbesondere sogenannte Superkondensatoren. Das erste Energiespeichersystem 71 ist ein wesentlicher Bestandteil eines Notstromversorgungssystems (Backup-System).

Wenn keine elektrische Leistung mehr über die Einspeiseleitung 11 oder die Versorgungsleitung 12 übertragen wird, muss zumindest ein Rotorblatt der Windkraftanlage derart verstellt werden, dass die Nabe 200 der Windkraftanlage nicht mehr vom Wind angetrieben wird. Dazu ist es in der Regel ausreichend, dass lediglich ein einzelnes Rotorblatt der Windkraftanlage mittels eines Elektromotors verstellt wird, wobei in der Praxis aus Sicherheitsgründen allerdings sämtliche Rotorblätter der Windkraftanlage verstellt werden. Das erste Energiespeichersystem 71 ist so ausgelegt, dass in dem beschriebenen Ausnahmefall ausreichend elektrische Energie bereitgestellt werden kann, um sämtliche Rotorblätter der Windkraftanlage zu verstellen. Das erste Energiespeichersystem 71 oder die vierte Leitung 34 oder die erste Verteilereinrichtung 21 weist eine nicht in Fig. 1 dargestellte Trenneinrichtung auf, um das erste Energiespeichersystem 71 elektrisch von der elektrischen Verteilereinrichtung 21 zu trennen. Dies ist erforderlich, um beispielsweise ein als Batterie ausgebildetes erstes Energiespeichersystem 71, welches über eine entsprechende Schaltung vollständig aufgeladen wurde, im laufenden Betrieb der Windkraftanlage vor unerwünschter Entladung durch den ersten, zweiten und/oder dritten Elektromotor 51, 52, 53 zu schützen. Sobald jedoch in einem Ausnahmefall die elektrische Versorgung des ersten, zweiten und/oder dritten Elektromotors 51, 52, 53 über den Umrichter 20 nicht mehr gegeben ist, wird die Trenneinrichtung automatisch geschlossen, so dass der erste, zweite und/oder dritte Elektromotor 51, 52, 53 wie beschrieben mittels des ersten Energiespeichersystems 71 betrieben werden kann.

Auf diese Weise bilden der erste, zweite und dritte Wechselrichter 41, 42, 43, die erste, zweite, dritte und vierte Leitung 31, 32, 33, 34, die erste Verteilereinrichtung 21 und das Energiespeichersystem 71 einen gemeinsamen Gleichspannungszwischenkreis. Die elektrische Zwischenkreisspannung des genannten Gleichspannungszwischenkreises kann insbesondere ca. 565 V bis ca. 680 V betragen.

Die erste Verteilereinrichtung 21 kann eine Zwischenkreiskapazität des Gleichspannungszwischenkreises umfassen, wobei ein Wert der Zwischenkreiskapazität zur Glättung des Gleichstroms z.B. 1120 µF betragen kann.

Die Komponenten der genannten ersten Ausführungsform des Windkraftanlagenblattverstellsystems 300 von Fig. 1 können durch eine nicht dargestellte, übergeordnete Steuerung zentral gesteuert werden.

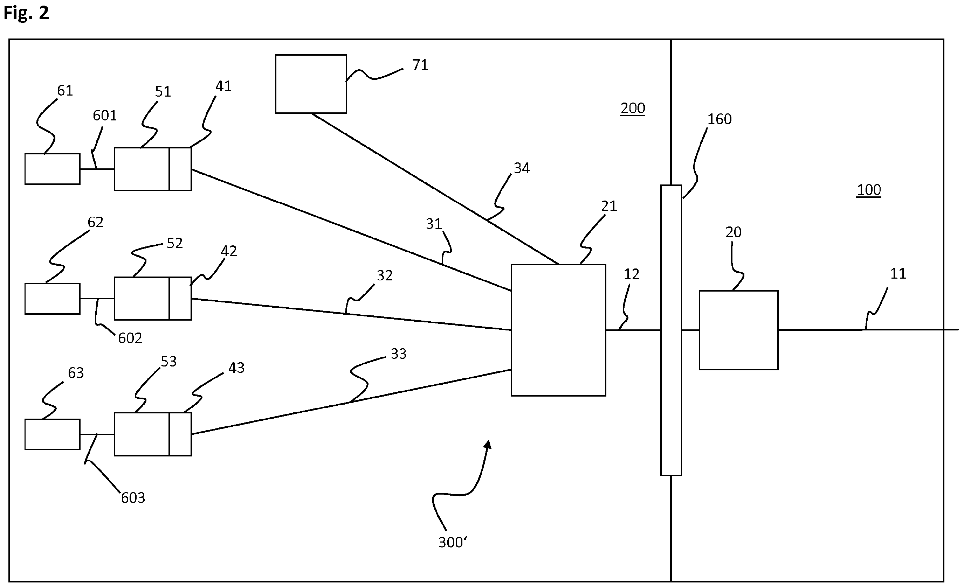

Fig. 2 zeigt ein Blockschaltbild einer zweiten Ausführungsform eines vorgeschlagenen Windkraftanlagenblattverstellsystems 300′ für eine Windkraftanlage. Wesentliche Komponenten sind identisch zur ersten Ausführungsform gemäß Fig. 1 und werden daher hier nicht nochmals erläutert. Der zentrale Gleichrichter 20 ist bei dieser Variante innerhalb der Gondel 100 angeordnet. Dadurch wird vorteilhaft erreicht, dass der zentrale Gleichrichter 20 nicht den erschwerten Umweltbedingungen innerhalb der Nabe 200 ausgesetzt ist. Das Gehäuse des zentralen Gleichrichters 20 kann daher vorteilhaft entsprechend schwächer und damit kostengünstiger ausgebildet sein. Bei der zweiten Ausführungsform des Windkraftanlagenblattverstellsystems 300′ ist es vorteilhaft nicht erforderlich, dass die Einspeiseleitung 11 einen ersten Schleifring 150 umfasst, weil stattdessen die elektrische Versorgungsleitung 12 einen zweiten Schleifring 160 aufweist, über den elektrischer Gleichstrom vom Gleichrichter 20 an die erste Verteilereinrichtung 21 geführt wird.

Eine Anordnung der im Zusammenhang mit der zweiten Ausführungsform des vorgeschlagenen Windkraftanlagenblattverstellsystems 300′ beschriebenen Komponenten in der Gondel 100 oder der Nabe 200 ist selbstverständlich auch bei den im Folgenden beschriebenen dritten, vierten und fünften Ausführungsformen des Windkraftanlagenblattverstellsystems 300ʺ, 300‴, 300ʺʺ denkbar und möglich, so dass die räumliche Zuordnung der Komponenten zu Gondel 100 und Nabe 200 nicht auf die zweite Ausführungsform des Windkraftanlagenblattverstellsystems 300' beschränkt ist. Dies trifft insbesondere auf die räumliche Anordnung des zentralen Gleichrichters 20 zu.

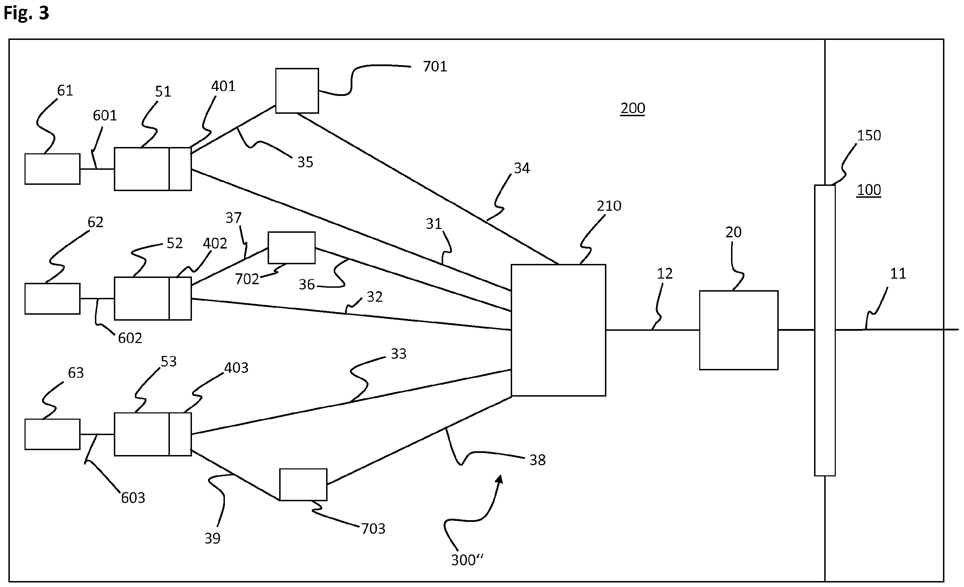

Fig. 3 zeigt ein prinzipielles Blockschaltbild einer dritten Ausführungsform eines vorgeschlagenen Windkraftanlagenblattverstellsystems 300ʺ für eine Windkraftanlage. Die dritte Ausführungsform ist sehr ähnlich zur ersten Ausführungsform des Windkraftanlagenblattverstellsystems 300 von Fig. 1 ausgebildet. Wesentliche Komponenten davon sind auch in der dritten Ausführungsform enthalten und werden deshalb hier nicht nochmals erläutert, weshalb nachfolgend nur Unterschiede erläutert werden.

Man erkennt anstelle der ersten Verteilereinrichtung 21 eine zweite Verteilereinrichtung 210. Die zweite Verteilereinrichtung 210 ist funktional mit der ersten Verteilereinrichtung 21 vergleichbar. Die zweite Verteilereinrichtung 210 weist im Vergleich zur ersten Verteilereinrichtung 21 zusätzlich einen Anschluss für eine sechste Leitung 36 und zusätzlich einen Anschluss für eine achte Leitung 38 auf.

Die erste Leitung 31 verbindet die zweite Verteilereinrichtung 210 funktional mit einem vierten Wechselrichter 401 und ist diesem somit zugeordnet. Die zweite Leitung 32 verbindet die zweite Verteilereinrichtung 210 funktional mit einem fünften Wechselrichter 402 und ist diesem somit zugeordnet. Die dritte Leitung 33 verbindet die zweite Verteilereinrichtung 210 funktional mit einem sechsten Wechselrichter 403 und ist diesem somit zugeordnet.

Die vierte Leitung 34 verbindet die zweite Verteilereinrichtung 210 funktional mit einem zweiten Energiespeichersystem 701. Die sechste Leitung 36 verbindet die zweite Verteilereinrichtung 210 funktional mit einem dritten Energiespeichersystem 702. Die achte Leitung 38 verbindet die zweite Verteilereinrichtung 210 funktional mit einem vierten Energiespeichersystem 703. Eine fünfte Leitung 35 verbindet das zweite Energiespeichersystem 701 funktional mit dem vierten Wechselrichter 401. Eine siebte Leitung 37 verbindet das dritte Energiespeichersystem 702 funktional mit dem fünften Wechselrichter 402. Eine neunte Leitung 39 verbindet das vierte Energiespeichersystem 703 funktional mit dem sechsten Wechselrichter 403.

Die erste bis neunte Leitung 31...39 der dritten Ausführungsform des Windkraftanlagenblattverstellsystems 300" überträgt jeweils elektrischen Gleichstrom zum vierten, fünften und sechsten Wechselrichter 401, 402, 403 bzw. zum zweiten, dritten und vierten Energiespeichersystem 701, 702, 703. Die erste bis neunte Leitung 31...39 kann jeweils zusätzlich eine Datenverbindung zwischen den genannten Komponenten bereitstellen, was insbesondere durch Ausbildung der genannten Leitungen als EtherCAT P^{®}-Leitung möglich ist.

Der vierte Wechselrichter 401 unterscheidet sich vom ersten Wechselrichter 41 gemäß Fig. 1 lediglich darin, dass der vierte Wechselrichter 401 zwei Anschlüsse aufweist: einen Anschluss für die erste Leitung 31 und einen Anschluss für die fünfte Leitung 35. Der vierte Wechselrichter 401 bildet mit dem ersten Elektromotor 51 eine bauliche Einheit. Funktional unterscheiden sich der vierte Wechselrichter 401 und der erste Wechselrichter 41 nicht voneinander.

Der fünfte Wechselrichter 402 unterscheidet sich vom zweiten Wechselrichter 42 gemäß Fig. 1 lediglich dadurch, dass der fünfte Wechselrichter 402 zwei Anschlüsse aufweist: einen Anschluss für die zweite Leitung 32 und einen Anschluss für die siebte Leitung 37. Der fünfte Wechselrichter 402 bildet mit dem zweiten Elektromotor 52 eine bauliche Einheit. Funktional unterscheiden sich der fünfte Wechselrichter 402 und der zweite Wechselrichter 42 nicht voneinander.

Der sechste Wechselrichter 403 unterscheidet sich vom dritten Wechselrichter 43 gemäß Fig. 1 lediglich dadurch, dass der sechste Wechselrichter 403 zwei Anschlüsse aufweist: einen Anschluss für die dritte Leitung 33 und einen Anschluss für die neunte Leitung 39. Der sechste Wechselrichter 403 bildet mit dem dritten Elektromotor 53 eine bauliche Einheit. Funktional unterscheiden sich der sechste Wechselrichter 403 und der dritte Wechselrichter 43 nicht voneinander.

Das Windkraftanlagenblattverstellsystem 300ʺ der dritten Ausführungsform weist im Gegensatz zum Windkraftanlagenblattverstellsystem 300 der ersten Ausführungsform ein zweites, ein drittes und ein viertes Energiespeichersystem 701, 702, 703 auf. Das genannte zweite, dritte und vierte Energiespeichersystem 701, 702, 703 kann in funktionaler Hinsicht wie das erste Energiespeichersystem 71 der ersten Ausführungsform des Windkraftanlagenblattverstellsystems 300 ausgebildet sein. Das zweite, dritte und vierte Energiespeichersystem 701, 702, 703 der dritten Ausführungsform des Windkraftanlagenblattverstellsystems 300ʺ bringt als Vorteil, dass das elektrische Speichervolumen der einzelnen Energiespeicherelemente reduziert werden kann. Jeder einzelne des vierten, fünften und sechsten Wechselrichters 401, 402, 403 verfügt damit quasi über sein eigenes zweites, drittes und viertes Energiespeichersystem 701, 702, 703, wodurch eine Kapazität eines einzelnen des zweiten, dritten und vierten Energiespeichersystems 701, 702, 703 nicht so groß sein muss.

Eine Redundanz ergibt sich in vorteilhafter Weise dadurch, dass jedem ersten bis dritten Elektromotor 51, 52, 53 zwar ein eigenes zweites bis viertes Energiespeichersystem 701, 702, 703 zugeordnet ist, wobei allerdings jeder erste bis dritte Elektromotor 51, 52, 53 mittels der zweiten Verteilereinrichtung 210 aus jedem des zweiten bis vierten Energiespeichersystems 701, 702, 703 energetisch gespeist werden kann.

Teile der vierten, fünften und sechsten Wechselrichter 401, 402, 403, die erste bis neunte Leitung 31...39, die zweite Verteilereinrichtung 210 und das zweite, dritte und vierte Energiespeichersystem 701, 702, 703 bilden auf diese Weise einen gemeinsamen elektrischen Gleichspannungszwischenkreis.

In einer weiteren, nicht in Figuren dargestellten Ausführungsform des Windkraftanlagenblattverstellsystems können die fünfte Leitung 35, die siebte Leitung 37 und die neunte Leitung 39 entfallen. Die elektrische Energieübertragung zwischen dem zweiten bis vierten Energiespeichersystem 701, 702, 703 und dem vierten bis sechsten Wechselrichter 401, 402, 403 erfolgt dann nicht über eine direkte Verbindung, sondern über die zweite Verteilereinrichtung 210 und die erste, bzw. zweite, bzw. dritte Leitung 31, 32, 33.

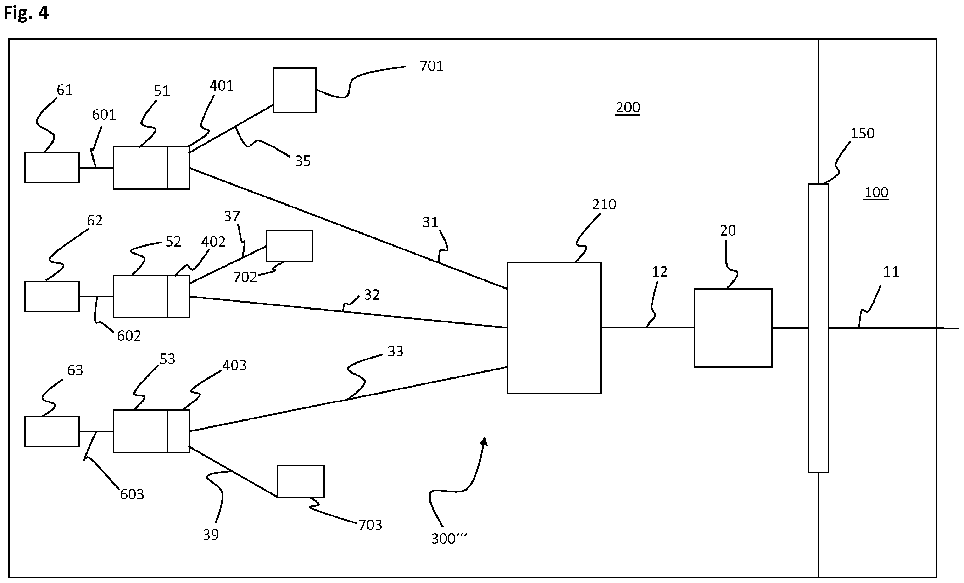

Fig. 4 zeigt ein prinzipielles Blockschaltbild einer vierten Ausführungsform eines vorgeschlagenen Windkraftanlagenblattverstellsystems 300‴. Die vierte Ausführungsform ist sehr ähnlich zur dritten Ausführungsform des Windkraftanlagenblattverstellsystems 300ʺ von Fig. 3 ausgebildet. Wesentliche Komponenten davon sind auch in der vierten Ausführungsform enthalten und werden deshalb hier nicht nochmals erläutert, weshalb nachfolgend nur Unterschiede erläutert werden.

Die fünfte Leitung 35 verbindet das zweite Energiespeichersystem 701 funktional mit dem vierten Wechselrichter 401. Eine siebte Leitung 37 verbindet das dritte Energiespeichersystem 702 funktional mit dem fünften Wechselrichter 402. Eine neunte Leitung 39 verbindet das vierte Energiespeichersystem 703 funktional mit dem sechsten Wechselrichter 403.

Die erste bis dritte Leitung 31, 32, 33 und die fünfte, siebte und neunte Leitung 35, 37, 39 der vierten Ausführungsform des Windkraftanlagenblattverstellsystems 300‴ übertragen elektrischen Gleichstrom zum vierten, bzw. fünften, bzw. sechsten Wechselrichter 401, 402, 403 bzw. zum zweiten, dritten und vierten Energiespeichersystem 701, 702, 703. Die erste bis dritte Leitung 31, 32, 33 und die fünfte, siebte und neunte Leitung 35, 37, 39 können zusätzlich eine Datenverbindung zwischen den genannten Komponenten bereitstellen, was insbesondere durch Ausbildung der genannten Leitungen als EtherCAT P^{®}-Leitung möglich ist.

Das Windkraftanlagenblattverstellsystem 300‴ der vierten Ausführungsform weist im Gegensatz zum Windkraftanlagenblattverstellsystem 300ʺ der dritten Ausführungsform keine vierte, sechste und achte Leitung 34, 36, 38 zwischen dem zweiten, dritten und vierten Energiespeichersystem 701, 702, 703 und der zweiten Verteilereinrichtung 210 auf. Das zweite, dritte und vierte Energiespeichersystem 701, 702, 703 kann in funktionaler Hinsicht wie das erste Energiespeichersystem 71 der ersten Ausführungsform des Windkraftanlagenblattverstellsystems 300 oder das zweite, dritte und vierte Energiespeichersystem 701, 702, 703 der dritten Ausführungsform des Windkraftanlagenblattverstellsystems 300ʺ ausgebildet sein. Das zweite, dritte und vierte Energiespeichersystem 701, 702, 703 der dritten Ausführungsform des Windkraftanlagenblattverstellsystems 300ʺ bringen als Vorteil, dass das elektrische Speichervolumen der einzelnen Energiespeicherelemente reduziert werden kann. Jeder einzelne des vierten, fünften und sechsten Wechselrichters 401, 402, 403 verfügt damit quasi über sein eigenes zweites, bzw. drittes, bzw. viertes Energiespeichersystem 701, 702, 703, wodurch eine Kapazität eines einzelnen des zweiten, dritten und vierten Energiespeichersystems 701, 702, 703 nicht so groß sein muss.

Ein Aufbau gemäß der vierten Ausführungsform des Windkraftanlagenblattverstellsystems 300‴ hat insbesondere den Vorteil, dass keine Beeinflussung des zweiten, dritten und vierten Energiespeichersystems 701, 702, 703 untereinander erfolgt. Sollte beispielsweise aufgrund eines Kurzschlusses eines des zweiten, dritten und vierten Energiespeichersystems 701, 702, 703 ungewollt entladen werden, so hat dies vorteilhaft keinen Einfluss auf die beiden anderen des zweiten, dritten und vierten Energiespeichersystems 701, 702, 703, so dass diese weiterhin den ihnen jeweils zugeordneten ersten, zweiten oder dritten Elektromotor 51, 52, 53 im Ausnahmezustand mit elektrischer Energie versorgen können.

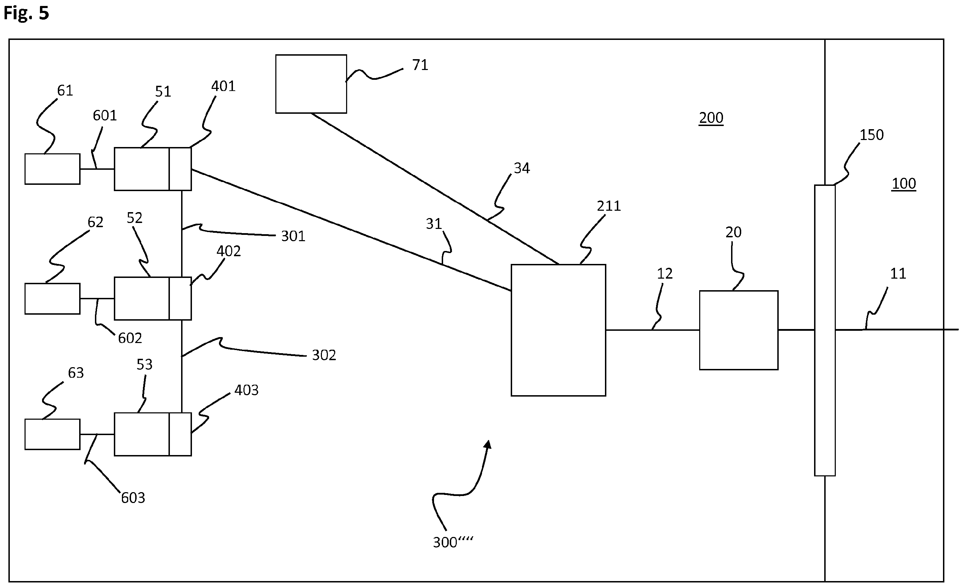

Fig. 5 zeigt ein Blockschaltbild einer fünften Ausführungsform eines vorgeschlagenen Windkraftanlagenblattverstellsystems 300ʺʺ. Die fünfte Ausführungsform ist im Wesentlichen vergleichbar mit der ersten Ausführungsform des Windkraftanlagenblattverstellsystems 300 gemäß Fig. 1. Viele Komponenten der ersten Ausführungsform sind auch in der fünften Ausführungsform enthalten, beispielsweise das erste Energiespeichersystem 71. Erkennbar ist, dass in der fünften Ausführungsform der vierte, fünfte und sechste Wechselrichter 401, 402, 403 der dritten Ausführungsform des Windkraftanlagenblattverstellsystems 300ʺ übernommen ist.

Erkennbar ist, dass eine dritte Verteilereinrichtung 211 lediglich drei Anschlüsse aufweist: einen ersten Anschluss für die erste Leitung 31, einen zweiten Anschluss für die vierte Leitung 34 und einen dritten Anschluss für die Versorgungsleitung 12.

Eine zehnte Leitung 301 verbindet den vierten Wechselrichter 401 mit dem fünften Wechselrichter 402. Eine elfte Leitung 302 verbindet den fünften Wechselrichter 402 mit dem sechsten Wechselrichter 403. Ein Anschluss des sechsten Wechselrichters 403 ist nicht belegt und wird nicht verwendet. Eine Leitung zwischen dem fünften Wechselrichter 402 und der dritten Verteilereinrichtung 211 kann vorteilhaft entfallen. Eine Leitung zwischen dem sechsten Wechselrichter 403 und der dritten Verteilereinrichtung 211 kann vorteilhaft entfallen. Die zehnte und elfte Leitung 301, 302 sind vorzugsweise sowohl für einen Datenaustausch als auch zum Übertragen von elektrischem Strom zwischen dem vierten, fünften und sechsten Wechselrichter 401, 402, 403 vorgesehen und können zu diesem Zweck z.B. als EtherCAT P^{®} Leitungen ausgebildet sein.

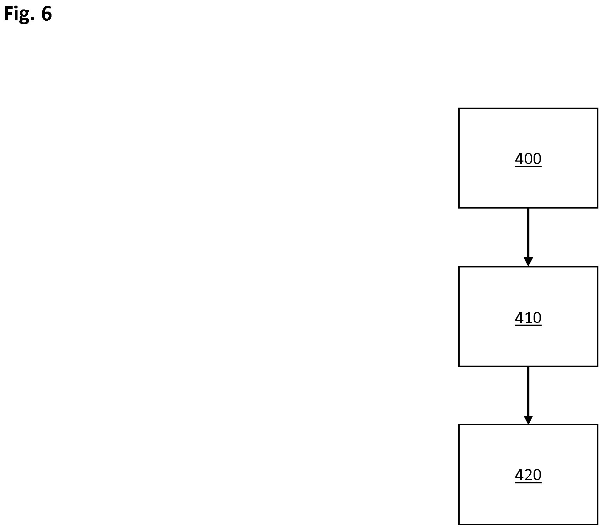

Fig. 6 zeigt ein prinzipielles Ablaufdiagramms eines Verfahrens zum Herstellen eines Windkraftanlagenblattverstellsystems.

In einem ersten Schritt 400 wird ein Bereitstellen wenigstens eines mittels eines Wechselrichters 41, 42, 43, 401, 402, 403 ansteuerbaren Elektromotors 51, 52, 53 durchgeführt. In einem zweiten Schritt 410 wird der Wechselrichter 41, 42, 43, 401, 402, 403 mittels eines Gleichrichters 20 ansteuerbar ausgebildet.

In einem dritten Schritt 430 wird der Gleichrichter 20 und der Wechselrichter 41, 42, 43, 401, 402, 403 im Windkraftanlagenblattverstellsystem 300; 300'; 300"; 300‴; 300ʺʺ örtlich voneinander getrennt angeordnet.

Zusammenfassend wird mit der vorliegenden Erfindung ein elektrisches Rotorblattverstellsystems für eine Windkraftanlage bzw. ein Windkraftanlagenblattverstellsystem mit einem "aufgelösten" Umrichter bereitgestellt. Durch die Auflösung des Umrichters können eine oder auch mehrere Stromspeicher (z.B. Batterien, Kondensatorbänke), welche als Sicherheitsmerkmal für eine Notfahrt des Verstellsystems bzw. einen optimierten Betrieb sehr nützlich sind, angeschlossen werden.

## Patentansprüche

1. Windkraftanlagenblattverstellsystem (für eine Windkraftanlage, aufweisend:
mehrere jeweils einem Rotorabschnitt (61, 62, 63) zugeordnete Elektromotoren (51, 52, 53), wobei jeder Elektromotor ausgelegt ist, ein Rotorblatt des entsprechenden Rotorabschnitts zu verstellen;
mehrere jeweils einem Elektromotor zugeordnete Wechselrichter (401, 402, 403), wobei jeder Wechselrichter ausgelegt ist, den entsprechenden Elektromotor anzutreiben, ,
einen Gleichrichter (20), der von den Wechselrichter (401, 402, 403) örtlich getrennt angeordnet ist und ausgelegt ist, die Wechselrichter über eine Verteilereinrichtung (210) mit Gleichstrom zu versorgen, und
mehrere jeweils einem Wechselrichter zugeordnete Energiespeichersystem (701, 702, 703), wobei jedes Energiespeichersystem ausgelegt ist, den entsprechenden Wechselrichter im Fall eines Stromausfalls mit elektrischer Energie zu versorgen,
**dadurch gekennzeichnet, dass**
die Verteilereinrichtung (210) mit jedem Energiespeichersystem (701, 702, 703) verbunden ist,
wobei die Verteilereinrichtung (21, 210, 211) ausgelegt ist, die Wechselrichter (401, 402, 403) im Fall des Stromausfalls mit elektrischer Energie aus den verbundenen Energiespeichersystem (701, 702, 703) zu versorgen.

2. Windkraftanlagenblattverstellsystem nach Anspruch 1,
**dadurch gekennzeichnet, dass** das Windkraftanlagenblattverstellsystem innerhalb einer Nabe (200) und einer Gondel (100) einer Windkraftanlage angeordnet ist, wobei eine Einspeiseleitung (11) über einen Schleifring (150) von der Gondel (100) zu dem der Gleichrichter (20) in die Nabe (200) führt.

3. Windkraftanlagenblattverstellsystem nach Anspruch 1 oder 2, **dadurch gekennzeichnet, dass** der Wechselrichter (401, 402, 403) im Elektromotor (51, 52, 53) angeordnet ist.

4. Windkraftanlagenblattverstellsystem nach einem der vorhergehenden Ansprüche, **dadurch gekennzeichnet, dass** die Verteilereinrichtung (210) intern oder extern vom Gleichrichter (20) angeordnet ist.

5. Windkraftanlagenblattverstellsystem nach einem der vorhergehenden Ansprüche, **dadurch gekennzeichnet, dass** die Wechselrichter (401, 402, 403) mit dem Gleichrichter (20) über wenigstens ein Leitung (31, 32, 33) verbunden sind, über die elektrische Energie und Daten übertragbar sind.

6. Windkraftanlagenblattverstellsystem nach einem der vorhergehenden Ansprüche, **dadurch gekennzeichnet, dass** ein Schleifring (150; 160) in einer Nabe (200) oder in einer Gondel (100) der Windkraftanlage angeordnet ist, wobei mittels des Schleifrings (150; 160) elektrische Leistung und/oder Daten für das Windkraftanlagenblattverstellsystem übertragbar sind.

7. Windkraftanlagenblattverstellsystem nach einem der vorhergehenden Ansprüche, **dadurch gekennzeichnet, dass** der wenigstens eine Wechselrichter (401, 402, 403) einen Stromregler aufweist.

8. Windkraftanlagenblattverstellsystem nach Anspruch 7,
**dadurch gekennzeichnet, dass** der wenigstens eine Wechselrichter (401, 402, 403) einen Geschwindigkeitsregler aufweist.

9. Windkraftanlagenblattverstellsystem nach Anspruch 8,
**dadurch gekennzeichnet, dass** der wenigstens eine Wechselrichter (401, 402, 403) einen Positionsregler aufweist.

10. Windkraftanlage aufweisend wenigstens ein Windkraftanlagenblattverstellsystem nach einem der vorhergehenden Ansprüche.

## Claims

1. Wind turbine blade adjustment system for a wind turbine, having:
a plurality of electric motors (51, 52, 53) respectively associated with a rotor section (61, 62, 63), wherein each electric motor is designed to adjust a rotor blade of the corresponding rotor section;
a plurality of inverters (401, 402, 403) respectively associated with an electric motor, wherein each inverter is designed to drive the corresponding electric motor,
a rectifier (20), which is arranged spatially separated from the inverters (401, 402, 403) and designed to supply direct current to the inverters by means of a distributor device (210), and
a plurality of energy storage systems (701, 702, 703) associated with a respective inverter, wherein each energy storage system is designed to supply electrical energy to the corresponding inverter in the event of a power failure,
**characterized in that**
the distributor device (210) is connected to each energy storage system (701, 702, 703), wherein the distributor device (21, 210, 211) is designed to supply electrical energy from the connected energy storage system (701, 702, 703) to the inverters (401, 402, 403) in the event of the power failure.

2. Wind turbine blade adjustment system according to Claim 1, **characterized in that** the wind turbine blade adjustment system is arranged within a hub (200) and a nacelle (100) of a wind turbine, wherein an infeed line (11) leads from the nacelle (100) to the rectifier (20) into the hub (200) via a slip ring (150).

3. Wind turbine blade adjustment system according to Claim 1 or 2, **characterized in that** the inverter (401, 402, 403) is arranged in the electric motor (51, 52, 53).

4. Wind turbine blade adjustment system according to one of the preceding claims, **characterized in that** the distributor device (210) is arranged internally or externally of the rectifier (20).

5. Wind turbine blade adjustment system according to one of the preceding claims, **characterized in that** the inverters (401, 402, 403) are connected to the rectifier (20) by means of at least one line (31, 32, 33), by means of which electrical energy and data can be transmitted.

6. Wind turbine blade adjustment system according to one of the preceding claims, **characterized in that** a slip ring (150; 160) is arranged in a hub (200) or in a nacelle (100) of the wind turbine, wherein electrical power and/or data for the wind turbine blade adjustment system can be transmitted by means of the slip ring (150; 160).

7. Wind turbine blade adjustment system according to one of the preceding claims, **characterized in that** the at least one inverter (401, 402, 403) has a current controller.

8. Wind turbine blade adjustment system according to Claim 7, **characterized in that** the at least one inverter (401, 402, 403) has a speed controller.

9. Wind turbine blade adjustment system according to Claim 8, **characterized in that** the at least one inverter (401, 402, 403) has a position controller.

10. Wind turbine having at least one wind turbine blade adjustment system according to one of the preceding claims.

## Revendications

1. Système de réglage de pale d'éolienne destiné à une éolienne, présentant :
plusieurs moteurs électriques (51, 52, 53) associés respectivement à une partie de rotor (61, 62, 63), chaque moteur électrique étant conçu pour régler une pale de rotor de la partie de rotor correspondante ;
plusieurs onduleurs (401, 402, 403) associés respectivement à un moteur électrique, chaque onduleur étant conçu pour entraîner le moteur électrique correspondant,
un redresseur (20) qui est disposé de manière géographiquement séparée des onduleurs (401, 402, 403), et qui est conçu pour alimenter les onduleurs en courant continu par un dispositif de distribution (210), et
plusieurs systèmes de stockage d'énergie (701, 702, 703) associés respectivement à un onduleur, chaque système de stockage d'énergie étant conçu pour alimenter l'onduleur correspondant en énergie électrique dans le cas d'une coupure d'électricité,
**caractérisé en ce que** le dispositif de distribution (210) est relié à chaque système de stockage d'énergie (701, 702, 703), le dispositif de distribution (21, 210, 211) étant conçu pour alimenter les onduleurs (401, 402, 403) en énergie électrique dans le cas de la coupure d'électricité, à partir du système de stockage d'énergie relié (701, 702, 703).

2. Système de réglage de pale d'éolienne selon la revendication 1, **caractérisé en ce que** le système de réglage de pale d'éolienne est disposé à l'intérieur d'un moyeu (200) et d'une nacelle (100) d'une éolienne, une ligne d'alimentation (11) allant de la nacelle (100) au redresseur (20) dans le moyeu (200) en passant par une bague collectrice (150).

3. Système de réglage de pale d'éolienne selon la revendication 1 ou 2, **caractérisé en ce que** l'onduleur (401, 402, 403) est disposé dans le moteur électrique (51, 52, 53).

4. Système de réglage de pale d'éolienne selon l'une quelconque des revendications précédentes, **caractérisé en ce que** le dispositif de distribution (210) est disposé à l'intérieur ou à l'extérieur du redresseur (20) .

5. Système de réglage de pale d'éolienne selon l'une quelconque des revendications précédentes, **caractérisé en ce que** les onduleurs (401, 402, 403) sont reliés au redresseur (20) par au moins une ligne (31, 32, 33) par laquelle de l'énergie électrique et des données peuvent être transmises.

6. Système de réglage de pale d'éolienne selon l'une quelconque des revendications précédentes, **caractérisé en ce qu'**une bague collectrice (150 ; 160) est disposée dans un moyeu (200) ou dans une nacelle (100) de l'éolienne, la bague collectrice (150 ; 160) permettant de transmettre de la puissance électrique et/ou des données pour le système de réglage de pale d'éolienne.

7. Système de réglage de pale d'éolienne selon l'une quelconque des revendications précédentes, **caractérisé en ce que** ledit au moins un onduleur (401, 402, 403) présente un régulateur de courant.

8. Système de réglage de pale d'éolienne selon la revendication 7, **caractérisé en ce que** ledit au moins un onduleur (401, 402, 403) présente un régulateur de vitesse.

9. Système de réglage de pale d'éolienne selon la revendication 8, **caractérisé en ce que** ledit au moins un onduleur (401, 402, 403) présente un régulateur de position.

10. Éolienne, présentant au moins un système de réglage de pale d'éolienne selon l'une quelconque des revendications précédentes.
